# EUROPEAN PATENT APPLICATION

(11) **EP 4 489 415 A1**
(43) Date of publication of application: **08.01.2025**
(21) Application number: 23183971.3
(22) Date of filing: 06.07.2023
(51) Int. Cl.: H04N 23/51, H04N 23/55, H04N 23/54, B60R 1/00, G02B 17/02, H04N 23/57, B60R 16/02

(54) **SENSOR UNIT AND METHOD FOR ASSEMBLING SAME**

(71) Applicant: Aptiv Technologies AG, 8200 Schaffhausen (CH)
(72) Inventor: RAFALOWSKI, Arkadiusz, 2 Dublin (IE); HEBDA, Pawel, 2 Dublin (IE)
(74) Representative: Lewis Silkin LLP

(57) **Abstract**

A sensor unit (10) features a housing (12) configured for selecting the position of an opening (22-24, 29-31) through a side wall that is aligned with a terminal portion of a printed circuit board. A connector device (14) is positionable through the selected opening for electrically communicating between the terminal portion and an external connector.

## Description

### Field of disclosure

The present disclosure relates to a sensor unit, particularly a camera unit/housing for use in the automotive field, and method of assembling same.

### Background

Sensors such as cameras are now common in automotive environments. A particular model of camera will generally have a predetermined configuration of components and a housing that is dimensioned to efficiently accommodate electronic and optical components therein. However, whilst multiple automakers may specify the same camera model, often they require a modified configuration in order to fit it into their vehicle. Therefore, a notable problem for a supplier of camera units is that the power/data cable connector may need to be located at a different side/direction/angle of the unit/housing, depending on the customer (automaker) specification.

According to known assembly methods, it is necessary for the supplier to develop a separate housing/casement design for each connector orientation required by an end user/manufacturer. Deviating from a standard design leads to higher tooling costs in order to produce a range of sub-models.

### Summary

The present disclosure seeks to address the above issues of conventional solutions and assembly methods or at least provide an alternative to the public and suppliers/manufacturers of sensor devices.

According to a first aspect, a sensor unit is provided according to claim 1. The sensor unit may comprise, for example, a walled housing including or adapted for formation of an opening at a selectable position that is generally alignable with a connector/terminal portion, in turn communicating with a printed circuit board, PCB, that is contained in the housing. In the case of an opening being preformed, there will be more than one opening, such that an opening position, providing a connector site from a particular direction, can be selected according to a construction requirement. The housing may be provided with at least one connector element for insertion into the formed opening to cooperate with the connector/terminal location on the PCB.

In one form there is provided a configurable housing for a sensor device, comprising: a plurality of opening positions, formed into housing; and a connector device. The plurality of opening positions enable selection of a position and direction of the connector device into the housing. In use, one end of the connector device will electrically communicate with a terminal portion of the sensor device within the housing and, at another end, is compatible with an external connector. In this way, the case is prefabricated to either enable drilling/milling of a connector hole (at more than one position) into the case in the direction required by a customer, or provided with pre-drilled openings (compatible with all planned variants) such that it is possible to plug any unnecessary holes during assembly of the unit or at the end use.

In embodiments, a plug can be made from aluminium (e.g. for laser welding to the case), plastic, rubber or any suitable material adapted for insertion to and forming a closure for the hole in the housing. The plug provides a seal against ingress of dust, fluids, or like contaminants. Plugs may be provided in each hole, for removal if selected as a connector site, or as a means to plug unselected holes after the connector site is selected.

In embodiments, more than one surface marking on the housing may indicate a position for a connector hole.

In embodiments of the housing in combination with a PCB or as part of the assembly method, a PCB can be fabricated for each planned connector orientation (which is the current practice, but at least saves on tooling in respect of the common housing as noted above). Alternatively, a PCB can be fabricated with a plurality of terminal/connector locations, providing for a connector to be coupled in each planned orientation.

The former solution requires multiple PCB layouts to be produced for implementation to the common housing, whereas the latter embodiment requires one PCB layout, but potentially with increased cost due to it having an unused connector position. Which solution of PCB is preferable can be determined during production planning, being a trade off between tooling set up and component cost/space on the PCB.

In embodiments, the more than one openings are each located proximate a common corner of the housing, i.e. close to where side walls meet. In this way, the potential connector opening positions are close to each other, but offset by the corner angle (e.g. 90 degrees). At a given corner there may be two, three or four angularly offset connector opening positions.

In embodiments, the housing is provided with at least one connector element for insertion into the formed opening and cooperation with a corresponding connector location on the PCB. In this way, an assembled sensor unit comprises an externally accessible connector, protruding from the housing side wall, at one position chosen/selected according to customer requirement. At the same time, the other connector/opening positions are either not formed or plugged.

It will be apparent that a housing may be provided with multiple connector locations/connector elements to communicate with the PCB connection features if this is required for operation of the unit.

A second aspect of the invention is embodied by a method for assembling a sensor unit according to claim 11, e.g. for supplying a camera unit adaptable to a range of vehicle requirements. The method of assembling a sensor unit (which comprises a housing and a sensor device at least partially accommodated by the housing) may comprise the steps of: configuring the position and direction of a connector site by either (i) selecting a location of the site and drilling/milling an opening through a wall of the housing, or (ii) selecting an opening from a plurality of preformed openings through the wall of the housing; installing the sensor device into the housing and aligning a terminal portion with the selected connector site; inserting a connector device through the selected opening, to be electrically connected with the terminal portion. The common concept between the method and the configurable housing described herein is the ability to use a common housing design and configure a connector site dependent on the location and direction of the connector that will depend on the end use.

### Brief Description of Drawings

Illustrative embodiments will now be described with reference to the accompanying drawings in which:
Figure 1 illustrates a camera unit with three possible locations for mounting a connector;
Figure 2 illustrates a camera unit having prefabricated connector opening positions, connector interfaces and hole plugs;
Figure 3 illustrates a completed camera unit assembly from Figure 2; and
Figure 4 illustrates a cutaway view showing internal detail of the housing.

### Detailed Description

The following description presents exemplary embodiments and, together with the drawings, serves to explain principles of the invention. However, the scope of the invention is not intended to be limited to the precise details of the embodiments or exact adherence with all system features and/or method steps, since variations will be apparent to a skilled person and are deemed also to be covered by the description. Terms for components used herein should be given a broad interpretation that also encompasses equivalent functions and features.

In some cases, several alternative terms (synonyms) for structural, system features have been provided but such terms are not intended to be exhaustive. For the avoidance of doubt, any terms separated by the "/" symbol generally refer to alternative "or" expressions where the terms can be used interchangeably. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Any directional terms such as "vertical", "horizontal", "up", "down", "sideways", "upper" and "lower" are used for convenience of explanation usually with reference to the form shown in illustrations and are not intended to be ultimately limiting if an equivalent function can be achieved with an alternative dimension and/or direction. All directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

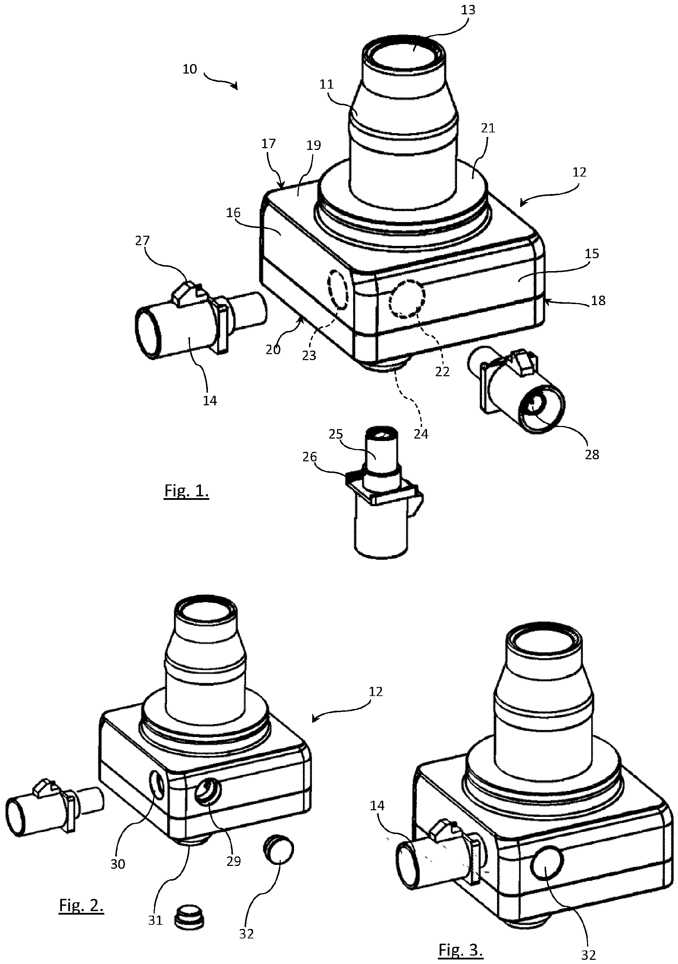

Figure 1 illustrates a sensor assembly, e.g. a camera unit 10 comprising a barrel 11 and a housing 12 for associated components such as a PCB (not shown) and serving as a mounting device. A distal end of the barrel accommodates a lens 13 which is maintained at a focal distance from an imager upon the internal PCB. Also shown, in exploded view, are three connector elements 14. However, in practice it is likely only one connector 14 will be incorporated with the assembly.

Housing 12 may be formed as a box enclosure for a PCB accommodated therein, having side wall surfaces 15, 16 17, 18, 19 and 20. In the illustrated form, surfaces 17, 18 and 20 are obscured from view as they are located either at the rear or underneath the housing, but are labelled for completeness. Barrel 11 extends from a base end 21 mounted at an upwardly facing wall 19 of the housing. The housing itself may snap fit together from two parts, or be fixed by fasteners or the like.

Housing 12 may be fabricated with provision for the barrel 11 to be attached as shown, e.g. over a circular opening, and for one or more side access openings 22, 23, 24, shown in dotted detail, to be formed through a wall of the housing, to enable communication to a connector/terminal upon the internal PCB.

The general embodiment of Figure 1 may have no prefabricated connector holes, such that one can be later drilled into the unit for completing assembly. In other words, an opening 21, 22 or 23 may drilled/milled in one position by a supplier or as a later step in manufacturing of housing 12.

Once an opening 22, 23 or 24 is formed, a connector 14 may be aligned with that hole, e.g. by an insertion end 25, delimited by a flange 26. A surface feature 27 of connector 14, e.g. extending from the barrel of the connector and/or flange 26, may provide an interface feature to secure an external connector (not shown) from the vehicle in place.

Connector element 14 will, at one end, be in electrical communication with a terminal contact portion of the PCB and, at the other end, be compatible to electrically communicate with an external connector as mentioned above. Connector 14 is attached to housing 12 to provide a permanent connection port, e.g. by adhesive, welding, snap fit, bayonet connection or the like.

A PCB and/or lens barrel 11 may be installed into/onto housing 12 after connector element 14 is secured in place on the housing wall. A suitable connection is made with terminal pins of the PCB so that a centre pin 28 or the like is available for operational use, such as for connecting power and data communication (PLC) between an ECU of the vehicle and the camera electronics. Assembly of the unit 10 is then complete and ready for installation in a vehicle.

A variation on the above is shown by Figures 2 and 3, e.g. where a housing 12 is provided with pre-drilled/formed holes 29, 30, 31 in all, or part, of the predicted places where a connector 14 will be needed. The unnecessary holes are then plugged by a suitable plug 32. "Plug" is used as a general term for an interference fit bung, but the unused holes in the housing may be closed off by welding or any other suitable method.

Once opening position(s) are prepared, a connector 14 is inserted into or out of the housing 12 as previously described. Likewise, further assembly of a PCB is described above.

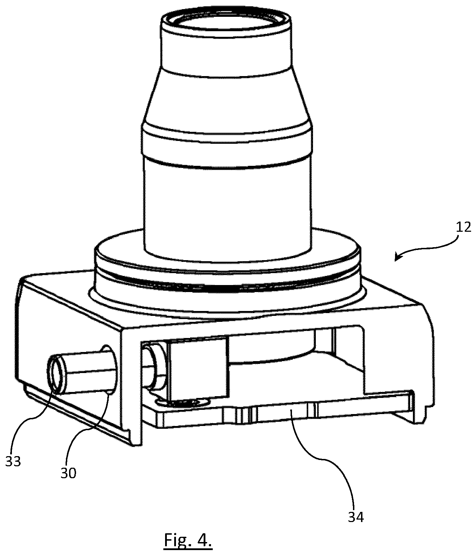

A further variant is shown by Figure 4, where a connector element 33 is shown connected at one end to a PCB 34, while the other end protrudes through opening 30 in the corner of the housing 12. Connector 33 may be enclosed by a further coaxial cover having an appearance similar to connector 14 from previous embodiments. The principle of assembly is the same as above, namely selecting the hole position based on the orientation of the connector relative to its contact point on the PCB 34.

Each of the illustrated embodiments shows an exemplary form where connector access holes 22-24 and 29-31 are formed proximate a corner (where the housing is box shaped) because such a configuration may provide the best compatibility to vehicle connector options.

Regardless of the process assembly used, there may also be two variants of PCB provided for use with the housing disclosed above. For example, (i) a dedicated PCB for each variant of connector position, or (ii) a PCB with terminals at all predicted connector locations or in part/some of them.

By way of summarising the benefit of the disclosure, in the prior art an automotive camera model is configured for one connector orientation only. If another connector orientation is required then development of new components is needed. To address this, the present camera housing unit is prepared for many connector (e.g. German standard FAKRA, Fachkreis Automobil) orientation variants and does not require a new housing configuration for each possibility, merely customisation during the assembly process by plugging holes or to drill/mill a specific one in a wall adapted for such formation. A surface marking may be provided to aid in locating hole formation, because a planned range of variants (e.g. in-vehicle configurations) will generally be predetermined.

The exemplary embodiments herein relate to a camera unit, e.g. with a lens and imager, but other sensor types may benefit from an adaptable housing (e.g. sub-assembly) that is configurable according to the entry direction of a connector that it will be required to interface when assembled into a vehicle or like assembly. As such, the present disclosure is directed to a sensor housing more generally, that is to house associated electronics either with or without the sensor itself.

By way of further summary, the concept herein relates to a sensor unit featuring a housing configured for selecting the position of an opening through a side wall that is aligned with a connection portion of a printed circuit board. A connector device is positionable through the selected opening for electrically communicating between the PCB and an external connector.

## Claims

1. A housing for accommodating at least part of a sensor device, comprising:
a plurality of opening positions, formed into housing; and
a connector device;
wherein the plurality of opening positions enable selection of a position and direction of the connector device into the housing for, at one end, electrically communicating with a terminal portion of the sensor device within the housing and, at another end, being compatible with an external connector.

2. The housing according to claim 1, wherein there are at least two side walls of the housing, disposed at an angle from each other, each comprising an opening of the plurality of opening positions, enabling different directions of selectable position for the connector device.

3. The housing according to claim 2, wherein the at least two side walls comprise a corner of the housing and at least two of the plurality of opening positions are located proximate the corner.

4. The housing according to any preceding claim , comprising a plug element for covering each unselected opening of the plurality of opening positions.

5. The housing according to claim 4, wherein the plug element provides a seal against ingress of dust and/or fluid.

6. The sensor unit according to any preceding claim, wherein the connector device comprises an insertion end for inserting into the selected opening.

7. The sensor unit according to any preceding claim, wherein the connector device comprises an engagement feature, for securing to the external connector.

8. A sensor unit comprising the housing according to any preceding claim, and a sensor device at least partially accommodated by the housing, wherein the sensor device includes a PCB having a plurality of terminal portions, one of which is alignable with a selected position of the connector device.

9. The sensor unit according to claim 8, wherein the PCB comprises an imager for alignment with a lens barrel of the sensor device extending from the housing.

10. A method of assembling a sensor unit comprising a housing and a sensor device at least partially accommodated by the housing, the method comprising the steps of:
configuring the position and direction of a connector site by either (i) selecting a location and drilling/milling an opening through a wall of the housing, or (ii) selecting an opening from a plurality of preformed openings through the wall of the housing;
installing the sensor device into the housing and aligning a terminal portion with the selected connector site;
inserting a connector device through the selected opening, to be electrically connected with the terminal portion.

11. The method of claim 10, wherein the connector device is fastened into the selected opening by adhesive or welding to the housing.

12. The method of any preceding claim 10 or 11, wherein, at option (ii), the non-selected preformed opening(s) is/are closed off by a plug.

13. The method of any preceding claim 10 to 12, wherein the sensor device comprises a lens barrel extending from the housing, alignable with an imager of a PCB accommodated within the housing.
